# EUROPEAN PATENT APPLICATION

(11) **EP 0 631 451 A2**
(43) Date of publication of application: **28.12.1994**
(21) Application number: 94109796.6
(22) Date of filing: 24.06.1994
(51) Int. Cl.: H04Q 7/04

(54) **Handover scheme in cellular system using variable channel switching control parameter setting based on mobile station state**

(30) Priority: 24.06.1993 JP 153908/93
(71) Applicant: NTT MOBILE COMMUNICATIONS NETWORK INC., Minato-ku, Tokyo (JP)
(72) Inventor: Nakano, Etsuhiro, Yokosuka-shi, Kanagawa 238-03 (JP); Mitsuru, Murata, Yokohama-shi, Kanagawa 236 (JP)
(74) Representative: Lehn, Werner, Dipl.-Ing.

(57) **Abstract**

A handover scheme in the cellular system capable of controlling the setting of the channel switching control parameters to the optimum values according to the state of each mobile station. In the cellular system, at least one of the mobile stations (11,12) and the base stations (31,32,33) includes: a unit for detecting a mobile station state of each mobile station located within a cell of each base station; a unit for calculating channel switching control parameters in accordance with the detected mobile station state; and a unit for executing a channel switching operation for each mobile station according to the calculated channel switching control parameters whenever each mobile station is moving out of the cell of each base station.

## Description

### BACKGROUND OF THE INVENTION

### Field of the Invention

The present invention relates to the strategies for the handover (handoff) of the communication zones allocated to the base stations at the mobile station in the cellular system such as the portable mobile telephone system.

### Description of the Background Art

In order to deal with the increase of the subscribers of the mobile communication service, it is popular to adopt the cellular scheme in which a transmission power of each of the base stations constituting the service area is set low to keep the communication zone called cell indicating a communication supported region of each base station to be in a relatively small range, such that the identical frequency can be utilized repeatedly at geographically separated regions. In this cellular scheme, the radius of the cell is made smaller for the purpose of improving the frequency utilization efficiency, but the smaller cell radius in turn requires more frequent channel switching (handover or handoff) operations in conjunction with the movement of the mobile station.

The channel switching is carried out when the monitored communication quality at the channels used between the base station and the mobile station become lower than the prescribed reference value, or when there appears a base station capable of providing the higher communication quality than that provided by the currently communicating base station above the prescribed reference value, by acquiring the idle channel at the switching target base station. Here, in order to eliminate the influence due to the unnecessary handover, the comparison of the communication quality with the reference value is carried out by taking an average over a prescribed period of time.

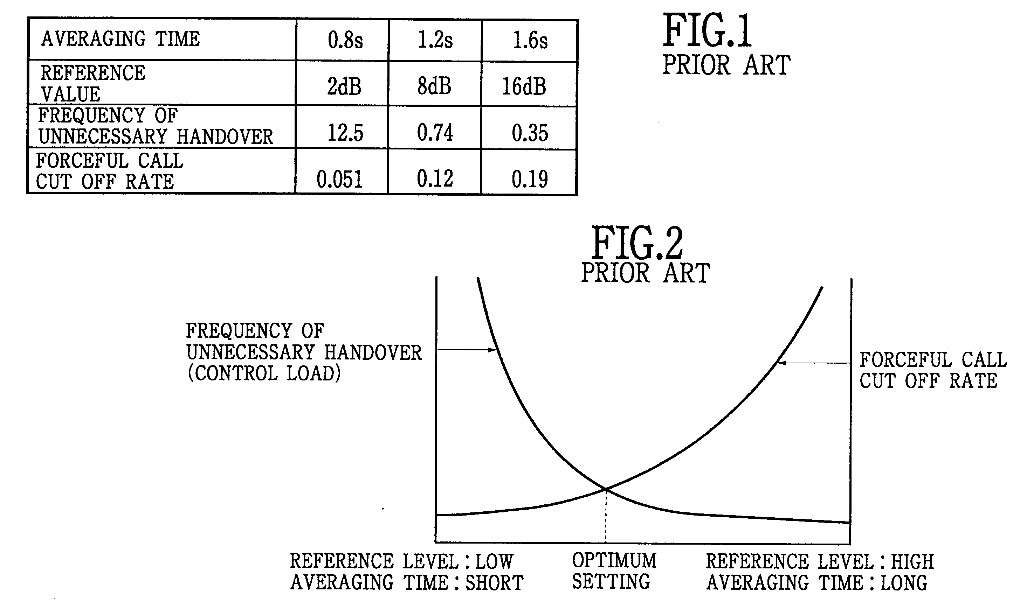

The relationships of a forceful call cut off rate and a frequency of unnecesary handover, i.e., a number of unnecessary channel switching operations which occur at locations where neighboring cells are overlapping with each other which indicates the control load, with respect to the channel switching control parameters such as the averaging time and the reference value for judging a necessity of channel switching are summarized in the table shown in Fig. 1, which shows a result of the computer simulation using 6 m/sec as the moving speed of the mobile station. It is noted here that the reference value for judging a necessity of channel switching indicates the reference value for the received signal level difference between the currently located cell and neighboring cell, while the averaging time indicates the number of samples for averaging required for measuring the received signal level.

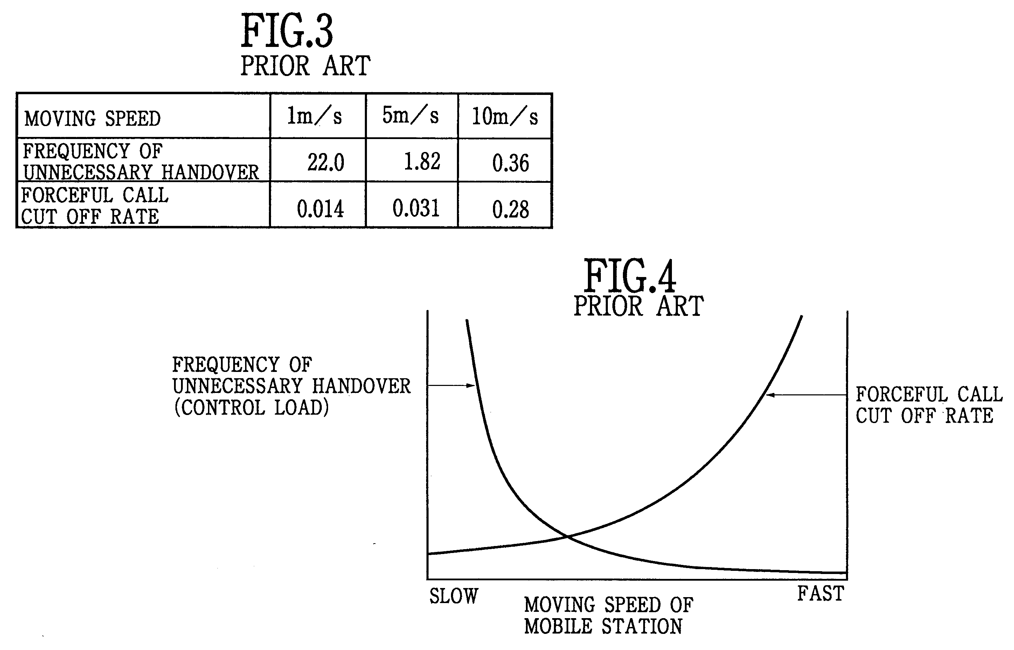

These relationships are also depicted in the graph shown in Fig. 2. As can be clearly seen in Fig. 2, the forceful call cut off rate and the frequency of unnecesary handover are inversely proportional to each other, and the optimum setting of the channel switching control parameters can be found at the intersection of the curves representing the forceful call cut off rate and the frequency of unnecesary handover as indicated in Fig. 2. This optimum setting of the channel switching control parameters is obtained in advance by the computer simulation and stored in the channel switching control circuit in the base station and the mobile station.

However, the forceful call cut off rate and the frequency of unnecesary handover also vary according to the state of the mobile station. Namely, the forceful call cut off rate and the frequency of unnecesary handover have the relationships with respect to the moving speed of the mobile station as summarized in the table shown in Fig. 3, which shows a result of the computer simulation using the averaging time of 1.2 sec and the reference value for judging a necessity of channel switching of 8 dB.

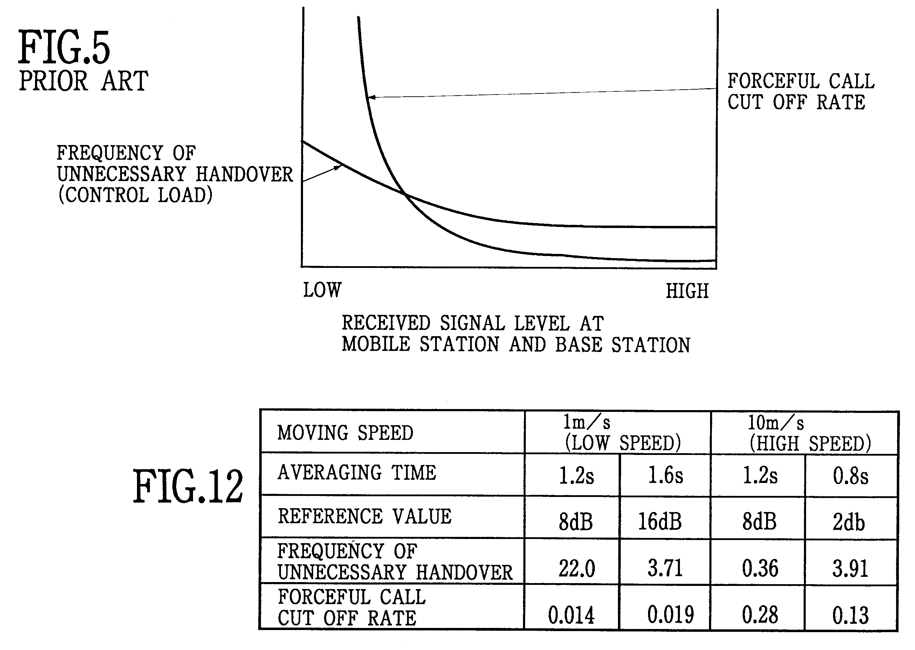

These relationships are also depicted in the graph shown in Fig. 4. As can be clearly seen in Fig. 4, the forceful call cut off rate is greater for the faster moving speed while the frequency of unnecesary handover is greater for the slower moving speed.

Also, the forceful call cut off rate and the frequency of unnecesary handover have the relationships with respect to the receive signal level at the mobile station and the base station as depicted in the graph shown in Fig. 5, which shows a result of the computer simulation.

As can be seen from the graphs of Figs. 4 and 5, the forceful call cut off rate and the frequency of unnecesary handover vary according to the state of the mobile station, so that the use of the uniform channel switching control parameter setting for all the mobile stations in various different states can cause the increase of the forceful call cut off rate and/or the control load depending on the state of each mobile station, and this in turn can lead to the deterioration of the quality of the channel switching operation in the cellular system.

### SUMMARY OF THE INVENTION

It is therefore an object of the present invention to provide a handover scheme for a cellular system capable of controlling the setting of the channel switching control parameters to the optimum values according to the communication and movement state of each mobile station.

According to one aspect of the present invention there is provided a cellular system comprising a plurality of mobile stations and a plurality of base stations controlled under a switching center, wherein at least one of the mobile stations and the base stations includes: mobile station state detection means for detecting a mobile station state of each mobile station located within a cell of each base station; channel switching control parameter calculation means for calculating channel switching control parameters in accordance with the mobile station state detected by the mobile station state detection means; and control means for executing a channel switching operation for said each mobile station according to the channel switching control parameters calculated by the channel switching control parameter calculation means whenever said each mobile station is moving out of the cell of said each base station.

According to another aspect of the present invention there is provided a method of handover in a cellular system comprising a plurality of mobile stations and a plurality of base stations controlled under a switching center, the method comprising the steps of: detecting a mobile station state of each mobile station located within a cell of each base station, by at least one of said each mobile station and said each base station; calculating channel switching control parameters at said at least one of said each mobile station and said each base station, in accordance with the mobile station state detected at the detecting step; and executing a channel switching operation for said each mobile station according to the channel switching control parameters calculated at the calculating step whenever said each mobile station is moving out of the cell of said each base station.

Other features and advantages of the present invention will become apparent from the following description taken in conjunction with the accompanying drawings.

### BRIEF DESCRIPTION OF THE DRAWINGS

Fig. 1 is a table summarizing the relationships of the forceful call cut off rate and the frequency of unnecesary handover with respect to the channel switching control parameters in the conventional cellular system.

Fig. 2 is a graph depicting the relationships of the forceful call cut off rate and the frequency of unnecesary handover with respect to the channel switching control parameters summarized in the table shown in Fig. 1.

Fig. 3 is a table summarizing the relationships of the forceful call cut off rate and the frequency of unnecesary handover with respect to the moving speed of the mobile station in the conventional cellular system.

Fig. 4 is a graph depicting the relationships of the forceful call cut off rate and the frequency of unnecesary handover with respect to the moving speed of the mobile station summarized in the table shown in Fig. 3.

Fig. 5 is a graph depicting the relationships of the forceful call cut off rate and the frequency of unnecesary handover with respect to the received signal level at the mobile station and the base station in the conventional cellular system.

Fig. 6 is a schematic diagram of an overall configuration of one embodiment of a cellular system according to the present invention.

Fig. 7 is a block diagram of a detailed configuration of a mobile station in the cellular system of Fig. 6.

Fig. 8 is a block diagram of a detailed configuration of a base station in the cellular system of Fig. 6.

Fig. 9 is an illustration of a conversion table used in the mobile station of Fig. 7 and the base station of Fig. 8.

Fig. 10 is a flow chart for the operation of the mobile station of Fig. 7.

Fig. 11 is a flow chart for the operation of the base station of Fig. 8.

Fig. 12 is a table summarizing the computer simulation result for the cellular system of Fig. 6.

### DETAILED DESCRIPTION OF THE PREFERRED EMBODIMENTS

Now, one preferred embodiment of the cellular system according to the present invention will be described in detail.

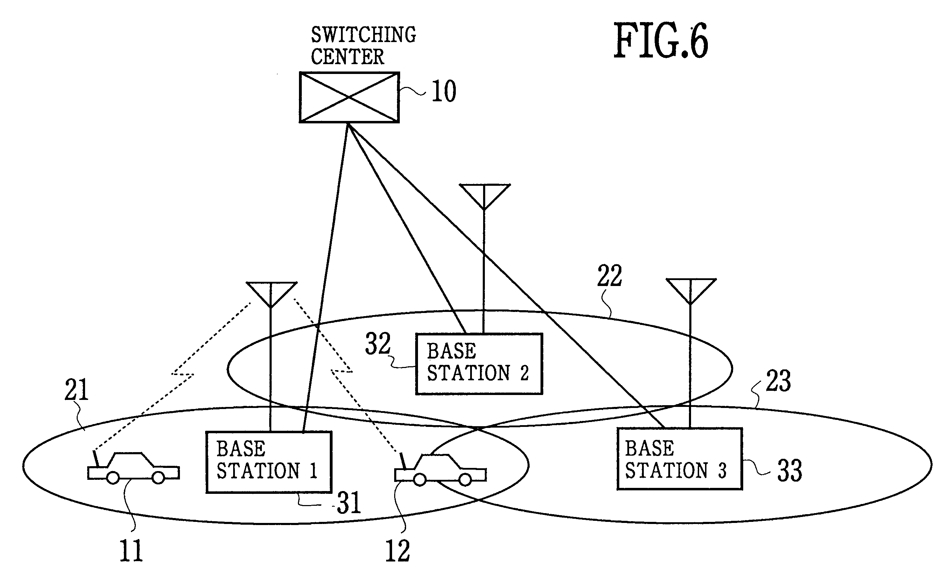

In this embodiment, the cellular system has an overall configuration as shown in Fig. 6, which generally comprises: a plurality (three in Fig. 6) of base stations 31, 32, and 33; a plurality (two in Fig. 6) of mobile stations 11 and 12 which can be connected with the base stations 31, 32, and 33 through radio transmission lines; and a switching center 10 for controlling the base stations 31, 32, and 33.

Here, the channel switching control parameters includes the reference value for the communication quality such as BER (Bit Error Rate), the reference value for the received signal level difference between the currently located cell and neighboring cell, and the number of samples for averaging required for measuring the BER and the received signal level, where either the reference value for the communication quality or the reference value for the received signal level difference can be used to indicate the reference value for judging a necessity of channel switching, while the number of samples for averaging can be used to indicate the averaging time.

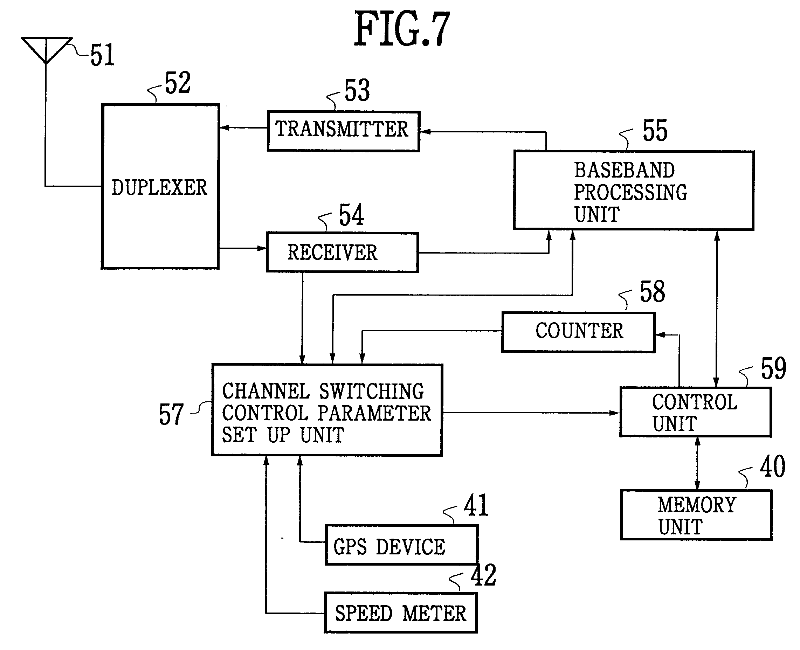

In this cellular system, each mobile station 11 or 12 has a detailed configuration as shown in Fig. 7, which comprises: an antenna 51 for radio transmission and reception with respect to the base station; a transmitter 53 and a receiver 54 connected with the antenna 51 through a duplexer 52; a baseband processing unit 55 connected between the transmitter 53 and the receiver 54; a channel switching control parameter set up unit 57 connected with the receiver 54 and the baseband processing unit 55; a control unit 59 connected with the baseband processing unit 55 and the channel switching control parameter set up unit 57; a counter 58 connected between the control unit 59 and the channel switching control parameter set up unit 57; a memory unit 40 connected with the control unit 59; and a GPS (Global Positioning System) device 41 and a speed meter 42 connected with the channel switching control parameter set up unit 57.

In this configuration of Fig. 7, the antenna 51, the duplexer 52, the transmitter 53, the receiver 54, and the baseband processing unit 55 are similar to those provided in the mobile station of the conventional cellular system. The data to be transmitted or received including the communication data such as the speech data and the control data for the channel switching are composed or decomposed at the baseband processing unit 55.

Here, however, instead of carrying out the channel switching according to the predetermined and pre-stored constant channel switching parameters as in the conventional cellular system, the channel switching control parameter set up unit 57 calculates the appropriate setting values of the channel switching control parameters according to the mobile station state data indicating the movement state and the communication state of the mobile station, and the control unit 59 executes the channel switching operation according to the calculated channel switching control parameters which are subsequently stored in the memory unit 40.

In this embodiment, the mobile station state data to be given to the channel switching control parameter set up unit 57 at each mobile station include at least one of the following.
(1) The received signal level at the mobile station obtained by the receiver 54.
(2) The elapsed time since the previous channel allocation obtained by the counter 58, which is reset by the control unit 59 whenever the channel switching operation is executed.
(3) The position of the mobile station obtained by the GPS device 41.
(4) The moving direction of the mobile station obtained by the GPS device 41.
(5) The moving speed of the mobile station obtained by the speed meter 42.
(6) The mobile station state data given from the base station obtained through the baseband processing unit 55.

It is also possible to notify these mobile station state data (1) to (5) to the base station via the baseband processing unit 55. In this case, it is apparently unnecessary to notify (6) as it originates from the base station.

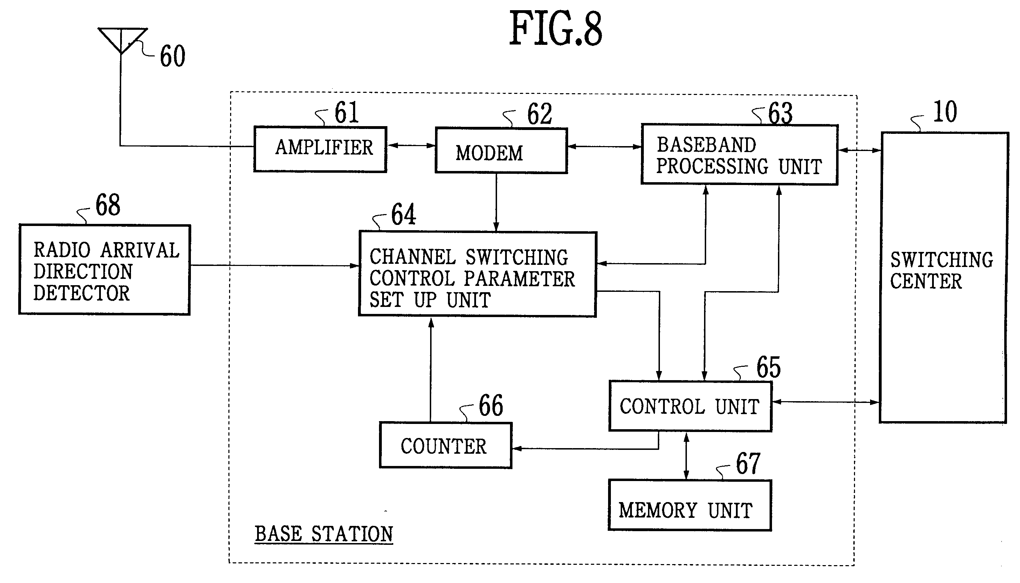

On the other hand, each base station 31, 32, or 33 has a detailed configuration as shown in Fig. 8, which comprises: a base station antenna 60; an amplifier 61 connected with the antenna 60; a modem unit 62 connected with the amplifier 61; a baseband processing unit 63 connected between the modem unit 62 and the switching center 10; a channel switching control parameter set up unit 64 connected with the modem unit 62 and the baseband processing unit 63; a control unit 65 connected with the channel switching control parameter set up unit 64, the baseband processing unit 63, and the switching center 10; a counter 66 connected between the control unit 65 and the channel switching control parameter set up unit 64; a memory unit 67 connected with the control unit 65; and a radio arrival direction detector 68 connected with the channel switching control parameter set up unit 64.

In this configuration of Fig. 8, the antenna 60, the amplifier 61, the modem unit 62, and the baseband processing unit 63 are similar to those provided in the base station of the conventional cellular system.

Also, in this configuration of Fig. 8, just as in the configuration of Fig. 7 for the mobile station, the data to be transmitted or received including the communication data such as the speech data and the control data for the channel switching are composed or decomposed at the baseband processing unit 63, while the channel switching control parameter set up unit 64 calculates the appropriate setting values of the channel switching control parameters according to the mobile station state data indicating the movement state and the communication state of the mobile station, and the control unit 65 executes the channel switching operation according to the calculated channel switching control parameters which are subsequently stored in the memory unit 67.

In this embodiment, the mobile station state data to be given to the channel switching control parameter set up unit 64 at each base station include at least one of the following.
(1) The received signal level at the base station obtained by the modem unit 62.
(2) The elapsed time since the previous channel allocation obtained by the counter 66, which is reset by the control unit 65 whenever the channel switching operation is executed.
(3) The position of the mobile station obtained by measuring the radio arrival time from the mobile station at the baseband processing unit 63.
(4) The moving direction of the mobile station obtained by the radio arrival direction detector 68.
(5) The moving speed of the mobile station obtained by measuring the fading pitch of the signal received at the modem unit 62.
(6) The mobile station state data given from the mobile station obtained through the baseband processing unit 63.

It is also possible to notify these mobile station state data (1) to (5) to the mobile station via the baseband processing unit 63. In this case, it is apparently unnecessary to notify (6) as it originates from the mobile station.

In addition, when any one of the mobile station 11 or 12 which has been located within the cell of one base station 31, 32, or 33 is moving out of that cell, that one base station 31, 32, or 33 hands over the communication line used by that one mobile station 11 or 12 to the neighboring one of the base stations 31, 32, and 33 without interrupting the communication by that one mobile station 11 or 12.

Thus, in this embodiment, the channel switching control parameters are set up by the channel switching control parameter set up unit 57 of each mobile station 11 or 12 according to at least one of the received signal level, the position, the moving speed, the moving direction, and the elapsed time since the previous channel allocation which are given from one of the base station 31, 32, or 33 in whose cell this mobile station 11 or 12 is located, while the channel switching control parameters are set up by the channel switching control parameter set up unit 64 of each base station 31, 32, or 33 according to at least one of the received signal level, the position, the moving speed, the moving direction, and the elapsed time since the previous channel allocation which are given from one of the mobile station 11 or 12 which is located within the cell of this base station 31, 32, or 33.

Furthermore, the control unit 59 of each mobile station 11 or 12 and the control unit 65 of each base station 31, 32, or 33 are capable of exchanging the data concerning the channel switching control parameters through the respective baseband processing units 55 and 63.

Here, the exchange of the data between the control units 59 and 65 is carried out whenever the setting value of each parameter exceeds the prescribed limit amount for change.

More specifically, at the mobile station 11 or 12, the data exchange with the base station is initiated at each of the following changing points.
(1) When the speed indicated by the speed meter 42 becomes 0 m/sec.
(2) When the position measured by the GPS device 41 moves for more than 100 m.
(3) When the direction measured by the GPS device 41 changes for more than 90°
(4) When the elapsed time since the previous channel allocation measured by the counter 58 becomes greater than 10 sec.
(5) When the received signal level obtained by the receiver 54 changes for more than 20 dB.

On the other hand, at the base station 31, 32, or 33, the data exchange with the mobile station is initiated at each of the following changing points.
(1) When the moving speed of the mobile station 11 or 12 estimated from the fading pitch becomes 0 m/sec.
(2) When the position of the mobile station 11 or 12 measured according to the position data extracted from the state data signal transmitted from the mobile station 11 or 12 or the change of the response time with respect to the state data signal request transmitted from the base station 31, 32, or 33 moves for more than 100 m.
(3) When the direction of the mobile station 11 or 12 measured according to the direction data extracted from the state data signal transmitted from the mobile station 11 or 12 or the radio arrival direction changes for more than 90°.
(4) When the elapsed time since the previous channel allocation measured by the counter 66 becomes greater than 10 sec.
(5) When the received signal level obtained by the modem unit 62 changes for more than 20 dB.

It is to be noted here that, in this embodiment, the measurement of the mobile station state data is made at both of the mobile station and the base station, and the data exchange between the mobile station and the base station is provided, for the following reason.

Namely, the measurement of the mobile station state at the base station requires very large measurement data, so that the control load of the base station can be increased considerably. Moreover, the measurement of the data such as the position of the mobile station can be achieved with the better precision by the mobile station rather than by the base station. On the other hand, the measurement of the mobile station state at the mobile station makes it difficult to change the channel switching control parameter setting scheme. In addition, the full measurement of the mobile station state at the mobile station can require the increase of the size of the mobile station. Thus, whether it is preferable to measure the mobile station state at the base station side or at the mobile station side depends on which parameters are to be measured. Furthermore, by measuring the mobile station state at both the mobile station side and the base station side, it is also possible to expect the improvement of the measurement precision.

However, it is not absolutely necessary for both of the mobile station and the base station to measure the mobile station state and change the channel switching control parameters separately, and if desired, it is possible to modify this embodiment such that the measurement of the mobile station state and the changing of the channel switching control parameters are carried out at either one of the mobile station or the base station alone.

Now, the operation of the mobile station and the base station in this embodiment will be described in detail.

In the mobile station of Fig. 7, when the channel allocation is made by the control unit 59, the control unit 59 outputs the reset signal for resetting the counter 58, such that the counter 58 counts the elapsed time since the channel allocation. Then, the channel switching control parameters set up unit 57 obtains the received signal level from the receiver 54, the moving speed of the mobile station from the speed meter 42, the moving direction and the position of the mobile station from the GPS device 41, and the elapsed time from the counter 58. In addition, the data concerning the received signal level at the base station which is transmitted from the base station and received by the receiver 54 is also entered into the channel switching control parameter set up unit 57 from the baseband processing unit 55.

Moreover, all the mobile station state data obtained at the mobile station are also entered from the channel switching control parameter set up unit 57 into the baseband processing unit 55, and transmitted to the base station from the transmitter 53.

Meanwhile, the channel switching control parameter set up unit 57 calculates the optimum setting values for the channel switching control parameters according to the obtained mobile station state data, and transmits the calculated setting values to the control unit 59. Then, the control unit 59 stores the received setting values into the memory unit 40, and carries out the subsequent channel switching operation according to the setting values stored in the memory unit 40.

On the other hand, in the base station of Fig. 8, when the channel allocation is made by the control unit 65, the control unit 65 outputs the reset signal for resetting the counter 66, such that the counter 66 counts the elapsed time since the channel allocation. Then, the channel switching control parameters set up unit 64 obtains the received signal level from the modem unit 62, the elapsed time from the counter 66, and the moving speed, the moving direction, and the position of the mobile station from the measurement of the fading pitch of the signal received at the modem unit 62, the radio arrival direction obtained by the radio arrival direction detector 68, and the radio arrival time from the mobile station at the baseband processing unit 63. Here, the moving speed, the moving direction, and the position of the mobile station may be obtained from the mobile station state data transmitted from the mobile station through the baseband processing unit 63.

Moreover, all the mobile station state data obtained at the base station are also entered from the channel switching control parameter set up unit 64 into the baseband processing unit 63, and transmitted to the mobile station from the modem unit 62.

Meanwhile, the channel switching control parameter set up unit 64 calculates the optimum setting values for the channel switching control parameters according to the obtained mobile station state data, and transmits the calculated setting values to the control unit 65. Then, the control unit 65 stores the received setting values into the memory unit 67, and carries out the subsequent channel switching operation according to the setting values stored in the memory unit 67.

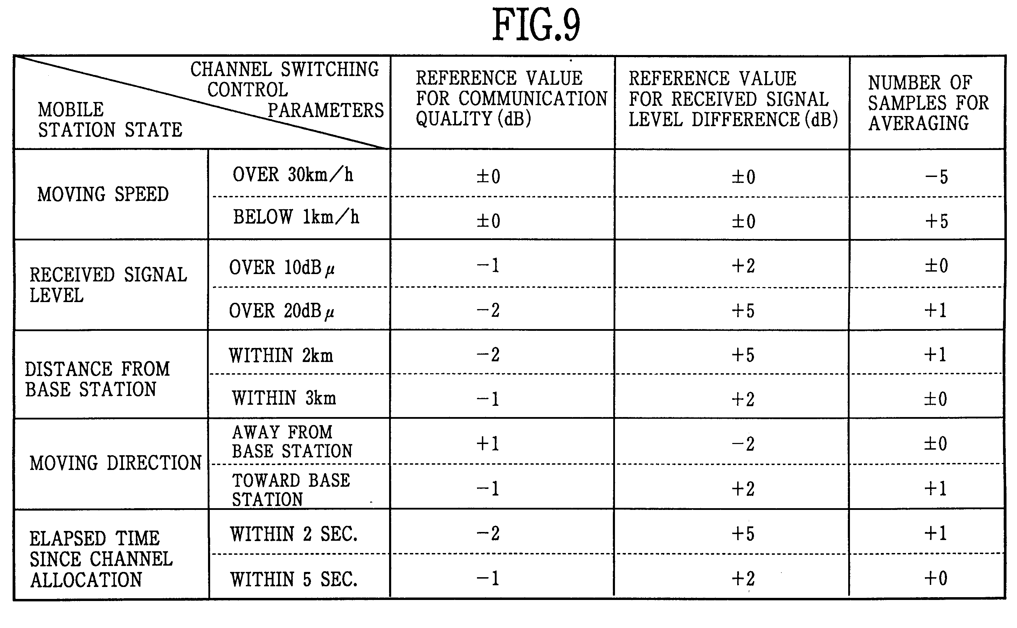

In this embodiment, the setting of the channel switching control parameters are determined at the channel switching control parameter set up unit 57 and 64 by using the conversion table as shown in Fig. 9. Namely, the channel switching control parameters such as the reference value for the communication quality, the reference value for the received signal level difference, and the number of samples for averaging are set to be the average values in advance, and whenever there arises a need to change these parameters due to the change of the mobile station state, the setting values of these parameters are increased or decreased from the average values according to this conversion table of Fig. 9.

When the conversion table such as that of Fig. 9 is used, the change of the parameter is going to be discrete and rather rough, but the finer parameter change can be realized by increasing a number of classified cases in the conversion table or by adopting the conversion using the equations.

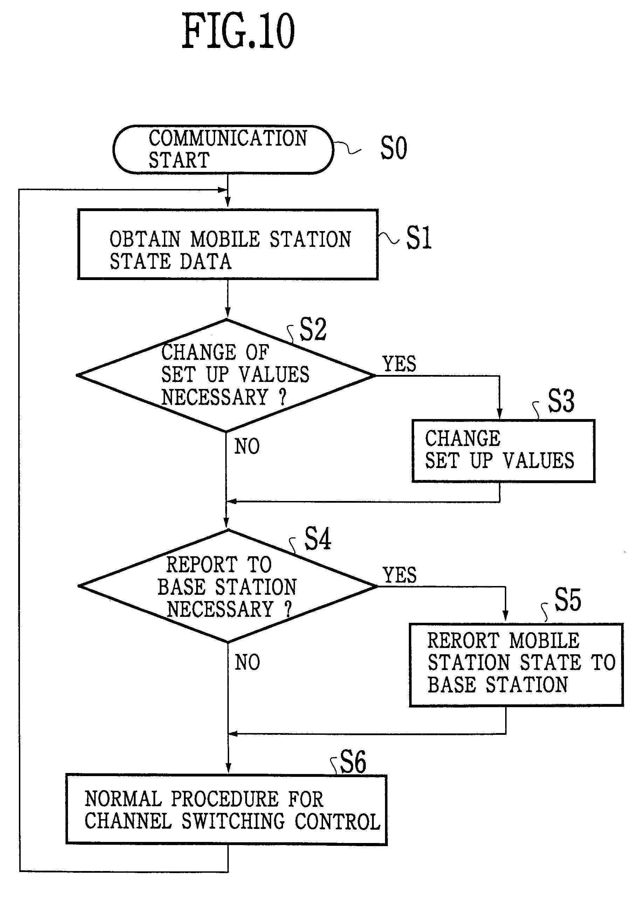

Thus, the mobile station 11 or 12 operates according to the flow chart of Fig. 10 as follows.

Namely, after the communication at the mobile station 11 or 12 is started, the channel switching control parameters are set to the reference parameter setting notified in advance from each of the base stations 31, 32, and 33, and stored in the memory unit 40 (step S0).

Then, the channel switching control parameter set up unit 57 obtains the mobile station state data from the receiver 54, the GPS device 41, the speed meter 42, and the baseband processing unit 55 (step S1), and judges whether the change of the channel switching control parameter setting values is necessary or not according to the obtained mobile station state data (step S2). When it is judged that the change of the setting values is necessary, the new setting values are calculated and transmitted to the control unit 59, and then the setting values stored in the memory unit 40 are updated.

Next, the control unit 59 judges whether the report of the new channel switching control parameter setting values to the base station is necessary or not according to the mobile station state data (step S4), and when it is judged that the report to the base station is necessary, the report is transmitted to the base station through the radio transmission line (step S5). Here, the reference value for the judgement of the necessity of the report to the base station is normally set equal to the reference value for the judgement of the necessity of the change of the setting values, but it is also possible to set the reference value for the judgement of the necessity of the report to the base station to be higher than the reference value for the judgement of the necessity of the change of the setting values in order to prevent the increase of the control data to be exchanged between the mobile station and the base station.

Then, the control unit 59 carries out the normal procedure for the channel switching control to realize the required channel switching operation (step S6).

This operation of Fig. 10 is then repeated for the subsequent channel switching operations.

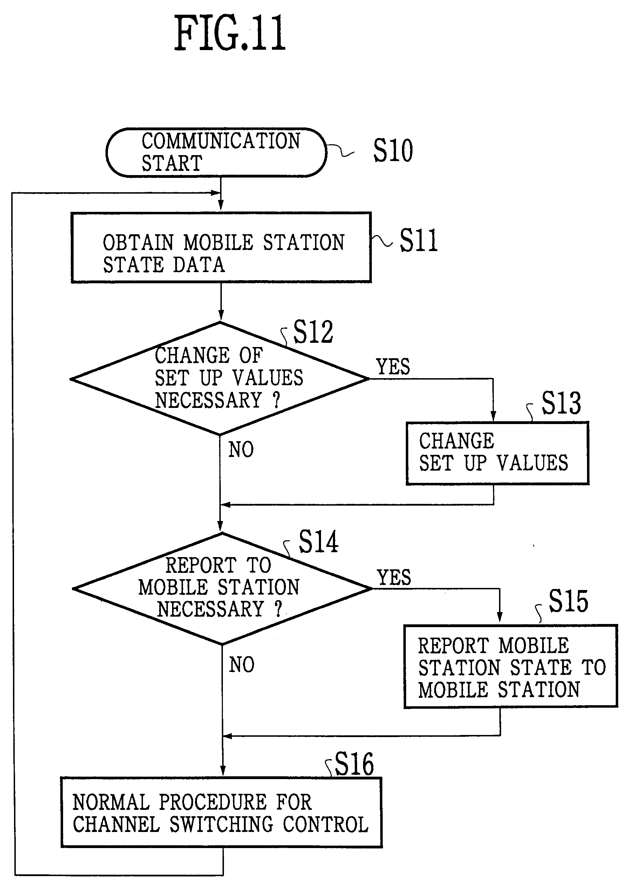

Similarly, the base station 31, 32, or 33 operates according to the flow chart of Fig. 11 as follows.

Namely, after the communication at the base station 31, 32, or 33 is started, the channel switching control parameters are set to the reference parameter setting set up in advance to each of the base stations 31, 32, and 33, and stored in the memory unit 67 (step S10).

Then, the channel switching control parameter set up unit 64 obtains the mobile station state data from the modem unit 62, the baseband processing unit 63, and the radio arrival direction detector 68 (step S11), and judges whether the change of the channel switching control parameter setting values is necessary or not according to the obtained mobile station state data (step S12). When it is judged that the change of the setting values is necessary, the new setting values are calculated and transmitted to the control unit 65, and then the setting values stored in the memory unit 67 are updated.

Next, the control unit 65 judges whether the report of the new channel switching control parameter setting values to the mobile station is necessary or not according to the obtained mobile station state data (step S14), and when it is judged that the report to the mobile station is necessary, the report is transmitted to the mobile station through the radio transmission line (step S15). Here, the reference value for the judgement of the necessity of the report to the mobile station is normally set equal to the reference value for the judgement of the necessity of the change of the setting values, but it is also possible to set the reference value for the judgement of the necessity of the report to the mobile station to be higher than the reference value for the judgement of the necessity of the change of the setting values in order to prevent the increase of the control data to be exchanged between the mobile station and the base station.

Then, the control unit 65 carries out the normal procedure for the channel switching control to realize the required channel switching operation (step S16).

This operation of Fig. 11 is then repeated for the subsequent channel switching operations.

Now, the effect of this embodiment related to the moving speed of the mobile station which is obtained by the computer simulation can be summarized as in the table shown in Fig. 12, which indicates that, when the moving speed is high, the forceful call cut off rate can be reduced by shortening the averaging time and lowering the reference value for judging a necessity of channel switching, whereas when the moving speed is low, the frequency of unnecesary handover can be reduced by extending the averaging time, and raising the reference value for judging a necessity of channel switching.

Similarly, when the received signal level is low, the forceful call cut off rate can be reduced by shortening the averaging time and lowering the reference value for judging a necessity of channel switching, whereas when the received signal level is high, the frequency of unnecesary handover can be reduced by extending the averaging time, and raising the reference value for judging a necessity of channel switching.

As a consequence, when the moving out of the currently located cell by the mobile station is judged to be approaching according to the data concerning the position and the moving direction of the mobile station, the forceful call cut off rate can be reduced by shortening the averaging time and lowering the reference value for judging a necessity of channel switching, whereas the moving out of the currently located cell by the mobile station is judged to be not approaching from the data concerning the position and the moving direction of the mobile station, the frequency of unnecesary handover can be reduced by extending the averaging time and raising the reference value for judging a necessity of channel switching.

It is also possible to estimate the possibility for the mobile station to remain in the currently located cell according to the elapsed time since the channel allocation, so that the frequency of unnecesary handover can be reduced by extending the averaging time and raising the reference value for judging a necessity of channel switching when the elapsed time since the channel allocation is short in which case the possibility for the mobile station to remain in the currently located cell is high.

In these manners, it is possible in the cellular system according to this embodiment to realize the high quality channel switching in which the forceful call cut off rate at a time of the channel switching is small, while the control load due to the unnecessary handover is also small, by appropriately changing the channel switching control parameters according to the mobile station state.

Thus, according to this embodiment, it is possible to provide a handover scheme in the cellular system capable of controlling the setting of the channel switching control parameters to the optimum values according to the state of each mobile station, so that the high quality communication incorporating the appropriate channel switching can be realized, and the efficient utilization of the radio communication can be achieved.

It is to be noted here that, besides those already mentioned above, many modifications and variations of the above embodiments may be made without departing from the novel and advantageous features of the present invention. Accordingly, all such modifications and variations are intended to be included within the scope of the appended claims.

## Claims

1. A cellular system comprising a plurality of mobile stations and a plurality of base stations controlled under a switching center, wherein at least one of the mobile stations and the base stations includes:
mobile station state detection means for detecting a mobile station state of each mobile station located within a cell of each base station;
channel switching control parameter calculation means for calculating channel switching control parameters in accordance with the mobile station state detected by the mobile station state detection means; and
control means for executing a channel switching operation for said each mobile station according to the channel switching control parameters calculated by the channel switching control parameter calculation means whenever said each mobile station is moving out of the cell of said each base station.

2. The cellular system of claim 1, wherein the mobile station state detection means, the channel switching control parameter calculation means, and the control means are provided in each one of the mobile stations and the base stations.

3. The cellular system of claim 2, wherein each one of the mobile stations and the base stations further includes data exchange means for exchanging data concerning the channel switching control parameters calculated by the channel switching control parameter calculation means provided therein with each other.

4. The cellular system of claim 3, wherein said data exchange means exchanges the data whenever any one of the channel switching control parameters calculated by the channel switching control parameter calculation means provided therein has changed for more than a predetermined reference value for judging a necessity of data exchange.

5. The cellular system of claim 4, wherein the predetermined reference value for judging a necessity of data exchange is identical to a reference value for judging a necessity of channel switching.

6. The cellular system of claim 4, wherein the predetermined reference value for judging a necessity of data exchange is higher than a reference value for judging a necessity of channel switching.

7. The cellular system of claim 1, wherein the mobile station state detection means detects the mobile station state indicating at least one of a received signal level for communication signals for said each mobile station, a position of said each mobile station, a moving speed of said each mobile station, a moving direction of said each mobile station, and an elapsed time since a previous channel allocation for said each mobile station.

8. The cellular system of claim 7, wherein the mobile station state detection means is provided in each mobile station, and said each mobile station includes at least one of:
receiver means for detecting the received signal level for communication signals for said each mobile station;
positioning means for detecting the position of said each mobile station and the moving direction of said each mobile station;
speed meter means for detecting the moving speed of said each mobile station; and
counter means for detecting the elapsed time since a previous channel allocation for said each mobile station.

9. The cellular system of claim 7, wherein the mobile station state detection means is provided in each base station, and said each base station includes at least one of:
receiver means for detecting the received signal level for communication signals for said each mobile station;
means for detecting the position of said each mobile station by measuring a time required for the communication signals for said each mobile station to reach said each base station from said each mobile station;
radio arrival direction detection means for detecting the moving direction of said each mobile station;
means for detecting the moving speed of said each mobile station by measuring the fading pitch of the communication signals for said each mobile station received at said each base station; and
counter means for detecting the elapsed time since a previous channel allocation for said each mobile station.

10. The cellular system of claim 7, wherein the channel switching control parameter calculation means calculates the channel switching control parameters such that an averaging time is shortened and a reference value for judging a necessity of channel switching is lowered when the moving speed of said each mobile station is high, and the averaging time is extended and the reference value for judging a necessity of channel switching is raised when the moving speed of said each mobile station is low.

11. The cellular system of claim 7, wherein the channel switching control parameter calculation means calculates the channel switching control parameters such that an averaging time is shortened and a reference value for judging a necessity of channel switching is lowered when the received signal level is low, and the averaging time is extended and the reference value for judging a necessity of channel switching is raised when the received signal level is high.

12. The cellular system of claim 7, wherein the channel switching control parameter calculation means calculates the channel switching control parameters such that an averaging time is shortened and a reference value for judging a necessity of channel switching is lowered when a moving out of said each mobile station from the cell of said each base station is judged to be approaching according to the position and the moving direction of said each mobile station, and the averaging time is extended and the reference value for judging a necessity of channel switching is raised when the moving out of said each mobile station from the cell of said each base station is judged to be not approaching according to the position and the moving direction of said each mobile station.

13. The cellular system of claim 7, wherein the channel switching control parameter calculation means calculates the channel switching control parameters such that an averaging time is extended and a reference value for judging a necessity of channel switching is raised when the elapsed time is short.

14. A method of handover in a cellular system comprising a plurality of mobile stations and a plurality of base stations controlled under a switching center, the method comprising the steps of:
detecting a mobile station state of each mobile station located within a cell of each base station, by at least one of said each mobile station and said each base station;
calculating channel switching control parameters at said at least one of said each mobile station and said each base station, in accordance with the mobile station state detected at the detecting step; and
executing a channel switching operation for said each mobile station according to the channel switching control parameters calculated at the calculating step whenever said each mobile station is moving out of the cell of said each base station.

15. The method of claim 14, wherein the detecting step, the calculating step, and the executing step are carried out by each one of the mobile stations and the base stations.

16. The method of claim 15, further comprising the step of:
exchanging data concerning the channel switching control parameters calculated at the calculating step by each one of the mobile stations and the base stations with each other.

17. The method of claim 16, wherein the exchanging step is carried out whenever any one of the channel switching control parameters calculated at the calculating step has changed for more than a predetermined reference value for judging a necessity of data exchange.

18. The method of claim 17, wherein the predetermined reference value for judging a necessity of data exchange is identical to a reference value for judging a necessity of channel switching.

19. The method of claim 17, wherein the predetermined reference value for judging a necessity of data exchange is higher than a reference value for judging a necessity of channel switching.

20. The method of claim 14, wherein the detecting step detects the mobile station state indicating at least one of a received signal level for communication signals for said each mobile station, a position of said each mobile station, a moving speed of said each mobile station, a moving direction of said each mobile station, and an elapsed time since a previous channel allocation for said each mobile station.

21. The method of claim 20, wherein the calculating step calculates the channel switching control parameters such that an averaging time is shortened and a reference value for judging a necessity of channel switching is lowered when the moving speed of said each mobile station is high, and the averaging time is extended and the reference value for judging a necessity of channel switching is raised when the moving speed of said each mobile station is low.

22. The method of claim 20, wherein the calculating step calculates the channel switching control parameters such that an averaging time is shortened and a reference value for judging a necessity of channel switching is lowered when the received signal level is low, and the averaging time is extended and the reference value for judging a necessity of channel switching is raised when the received signal level is high.

23. The method of claim 20, wherein the calculating step calculates the channel switching control parameters such that an averaging time is shortened and a reference value for judging a necessity of channel switching is lowered when a moving out of said each mobile station from the cell of said each base station is judged to be approaching according to the position and the moving direction of said each mobile station, and the averaging time is extended and the reference value for judging a necessity of channel switching is raised when the moving out of said each mobile station from the cell of said each base station is judged to be not approaching according to the position and the moving direction of said each mobile station.

24. The method of claim 20, wherein the calculating step calculates the channel switching control parameters such that an averaging time is extended and a reference value for judging a necessity of channel switching is raised when the elapsed time is short.
